# EUROPÄISCHE PATENTSCHRIFT

(11) **EP 3 837 103 B1**
(45) Veröffentlichungstag und Bekanntmachung des Hinweises auf die Patenterteilung: **12.02.2025**
(21) Anmeldenummer: 19755877.8
(22) Anmeldetag: 14.08.2019
(51) Int. Cl.: B29C 64/153, B29C 64/268, B22F 3/105, B23K 26/073, B29C 64/282, B23K 26/064, B23K 26/082, B23K 26/342, B33Y 10/00, B33Y 30/00, B22F 10/28, B22F 10/36, B22F 10/366, B22F 12/00, B22F 12/44, B22F 12/49

(54) **BAUTEILEDRUCKVERFAHREN UND VORRICHTUNGEN HIERFÜR**
3D PRINTING METHOD FOR PRINTING COMPONENTS, AND CORRESPONDING DEVICES
PROCÉDÉ D'IMPRESSION DE COMPOSANTS ET DISPOSITIFS ASSOCIÉS

(30) Priorität: 17.08.2018 DE 102018213868; 08.11.2018 DE 102018219032
(43) Veröffentlichungstag der Anmeldung: 23.06.2021
(73) Patentinhaber: Bennewitz, Denise, 86495 Eurasburg (DE)
(72) Erfinder: KARG, Michael, 82131 Gauting (DE)
(74) Vertreter: Vossius & Partner Patentanwälte Rechtsanwälte mbB
(86) Internationale Anmeldenummer: PCT/EP2019/071866
(87) Internationale Veröffentlichungsnummer: WO 2020/035543

(56) Entgegenhaltungen:
- DE-A1- 102015 202 347
- JP-A- 2004 314 406
- KR-B1- 101 740 266
- US-A1- 2018 193 955

## Beschreibung

Die vorliegende Erfindung bezieht sich auf den Druck von Bauteilen.

Das sogenannte 3D-Drucken von Bauteilen ist bekannt. Bei derartigen Verfahren wird ein herzustellendes Bauteil sukzessive aufgebaut, indem Material durch Bestrahlung dazu gebracht wird, sich so aneinander anzulagern, dass das gewünschte Bauteil gebildet wird. Diese Anlagerung kann etwa durch Auslösen einer lokalen chemischen Additionsreaktion geschehen oder aber z.B. durch Aufschmelzen und/oder Versintern von Pulvern durch hinreichend hochenergetische Strahlung. Diese Herstellungsverfahren werden daher auch als additive Herstellungsverfahren bezeichnet.

Bei additiven Herstellungsverfahren wie etwa dem Laserstrahlschmelzen besteht ein Problem dahingehend, dass die Fertigung aufgrund der nur langsamen Produktionsgeschwindigkeiten mit herkömmlichen Maschinen teuer ist. Die Produktionsgeschwindigkeit kann nicht einfach dadurch immer weiter erhöht werden, dass mit größerer Laserstrahlleistung immer schneller aufgeschmolzen wird, weil dann die mit dem Aufwärmen und Abkühlen des Materials - auch aufgrund der erzeugten Temperaturgradienten - verbundenen Probleme noch größer werden.

Es sind bereits verschiedene Strahlquerschnitte vorgeschlagen worden, um die Fertigung zu verbessern. So werden neben einem Strahlquerschnitt mit Gaußprofil Strahlen mit sog. Top-Hat-Profil verwendet oder mehrere Strahlen mehr oder weniger stark überlappend zu Linien oder Matrizen kombiniert. Zudem wird eine Verwendung von Strahlprofilen vorgeschlagen, bei welchen eine Vorheizung des aufzuschmelzenden Materials in einem Bereich geringerer Strahlintensität erfolgt, vgl. z.B. EP 2 335 848 B1.

Mit einer Anordnung gemäß EP 2 909 007 B1 soll ein durchgehendes Schmelzbad gebildet werden, indem eine Laserlinie mit zusammenhängender Intensitätsverteilung aus Einzelstrahlen gebildet wird. Unter einer zusammenhängenden Intensitätsverteilung wird dabei verstanden, dass die Intensität innerhalb des belichteten Bereichs nicht unter 10% der Maximalintensität in diesem Bereich abfällt. Eine Bewegungseinrichtung weist dabei vorzugsweise eine oder zwei Translationsachsen auf, die senkrecht zueinander stehen können. Es wird ausgeführt, dass durch eine Anordnung einzelner Laserspots, deren Durchmesser und durch die Modulation der Leistung die einwirkende Leistungsdichteverteilung räumlich und zeitlich so verändert wird, dass durch das sich im Werkstoff einstellende Temperaturfeld die Abmessungen des entstehenden Schmelzbades an die zu erzeugende Bauteilgeometrie angepasst werden. So soll ermöglicht werden, die Abmessungen des Schmelzbades in den Dimensionen Länge, Breite und Tiefe unabhängig voneinander einzustellen und während der Bearbeitung dynamisch zu verändern.

Aus der Veröffentlichung "Laser powder-bed fusion additive manufacturing: Physics of complex melt flow and formation mechanisms of pores, spatter, and denudation zones" von Saad A. Khairallah, Andrew T. Anderson, Alexander Rubenchik, Wayne E. King in Acta Materialia 108(2016) 36-45 ist es bekannt, dass die Erzeugung tiefer Absenkungen während des Schmelzprozesses vermieden werden sollte, um eine Porenbildung zu verhindern. Bei Richtungsänderung entlang einer Scanbahn soll die Laserintensität verringert werden, da zusätzliche Wärme zu tiefen und engen Ausnehmungen führen könnte, die kollabieren und Poren bilden. Ein geeigneter Scanvektor-Überlapp soll dagegen die Verdichtung erhöhen, indem partiell geschmolzene und eingeschlossene Teile und zugehörige flache Lateralporen eliminiert werden. Die Autoren schlagen ein sanftes Herunterfahren der Laserleistung am Scanbahnende zur Verbesserung der Oberflächenqualität vor.

Aus der EP 3 017 895 A1 ist ein Verfahren zum Herstellen eines Bauteils durch selektives Laserschmelzen bekannt. Es wird ein Laserfeld mit z.B. bis zu 20 simultan verwendeten Lasern erzeugt, die selektiv ein- oder ausgeschaltet werden können, um bestimmte Bereiche zu bestrahlen oder nicht zu bestrahlen. Damit soll pulverförmiges Material selektiv zum Erzeugen von Konturen geschmolzen werden. Es ist einsichtig, dass das Ausschalten die eingestrahlte Leistung gegenüber einer mit allen Lasern gemeinsam erzeugbaren Maximalleistung zwingend verringert. Wo Effekte durch besonders hohe Leistungen für besonders schnelles Bearbeiten in der Produktfertigung berücksichtigt werden müssen, ist die Bearbeitung durch die wechselnde Leistung zudem sogar erschwert.

Aus der DE 10 2011 079 521 A1 ist ein Verfahren bekannt, bei welchem ein Laserstrahl zur schichtweisen Herstellung von dreidimensionalen Objekten mit einem Strahlformungssystem geformt wird. Dabei soll die maximale Leistungsdichte im Fokus nicht größer als 50% über dem Mittelwert der Leistungsdichte im Fokus eingestellt werden. Dies soll bei der Verwendung der Anordnung mit Kunststoffpartikeln vorteilhaft sein.

Aus der WO 2012/136615 A1 ist eine Anlage zum Laserschmelzen bekannt, bei welcher ein gegenüber einem Gaußstrahl verbessertes Intensitätsprofil verwendet werden soll. Es wird ausgeführt, dass das Aufschmelzen der Randpartikel bei bekannten Strahlprofilen durch den Intensitätsabfall Probleme am Rand erzeugt, dadurch der Prozess schwer zu beherrschen sei und die Gefahr, dass sich die Oberflächengüte des Bauteiles verringert, groß sei. Es wird daher ein über eine definierte Fläche gleichmäßiges Intensitätsprofil angestrebt, das insbesondere nahezu rechteckig sein soll.

Aus der WO 2017/190863 A1 ist ein Verfahren bekannt, um die Kalibrierung eines Bestrahlungssystems zu vereinfachen.

Ein "OPTISCHES SYSTEM ZUR VARIABLEN STRAHLFORMUNG" ist aus einem Jahresbericht des FhG ILT bekannt, wobei das Intensitätsprofil als wichtiger Prozessparameter signifikant das Bearbeitungsergebnis laserunterstützter Bearbeitungsverfahren beeinflussen soll. Das von einer Laserstrahlquelle emittierte, oftmals gaußförmige Intensitätsprofil werde bei vielen Anwendungen mit Hilfe von optischen Strahlformungselementen in prozessangepasste Intensitätsprofile transformiert. Die hierbei geformten Intensitätsprofile seien jedoch statisch, eine dynamische Anpassung an den Prozess nicht möglich. Daher wird ein optisches System beschrieben, welches wahlweise einen rotationssymmetrischen, gaußförmigen oder einen homogenen, linienförmigen Spot in der Bearbeitungsebene bereitstellt. Es wird angegeben, dass zur Formung eines gaußschen Eingangsstrahls zu einem homogenen, linienförmigen Spot in der Bearbeitungsebene ein aus Zylinderlinsen bestehendes optisches System vorgesehen werden kann und dass bei einem vom Fraunhofer ILT zum Patent angemeldetes Verfahren das System dahingehend angepasst ist, dass der Grad der Homogenisierung variiert werden kann.

Mit dem optischen System kann angeblich neben einer rotationssymmetrischen Intensitätsverteilung mit Gauß-Profil eine linienförmige Intensitätsverteilung mit einem Seitenverhältnis von 30:1 erzeugt werden. Die linienförmige Intensitätsverteilung soll dabei in der Längsachse eine hohe Homogenität aufweisen. Während des Umschaltvorgangs zwischen den Intensitätsprofilen soll der Arbeitsabstand nicht verändert werden. Für den Wechsel in ein anderes Intensitätsprofil braucht das System angeblich < 0,2 s. Die verwendeten Zylinderlinsen aus Quarzglas erlauben darüber hinaus angeblich den Einsatz von Laserleistungen bis zu 2 kW.

Es wird angegeben, dass von der variablen Strahlformung prinzipiell alle Lasermaterialbearbeitungsverfahren profitieren, bei denen das Intensitätsprofil in der Bearbeitungsebene homogenisiert wird. Durch den gewonnenen Freiheitsgrad sollen zusätzlich auch gaußförmige Profile einsetzbar sein und sich positive Auswirkungen auf die Bearbeitungszeit und -qualität ergeben.

Aus der DE 10 2015 202 347 A1 ist ein 3D-Bauteildruckverfahren bekannt, bei welchem ein Körper aus Ausgangsmaterial aufgebaut wird, das spurenweise mit einem Strahl bestrahlt wird, sowie ein durch dieses Verfahren hergestelltes 3D-Druckbauteil. Der Strahl hat ein wirksames Flächenprofil, das nicht rotationssymmetrisch ist, wobei das wirksame Flächenprofil des Strahls der Spurrichtung entsprechend ausgerichtet wird. Die Offenbarung betrifft ferner eine strahlausrichtende Baugruppe für eine 3D-Druckmaschine sowie eine 3D-Druckmaschine mit einer solchen strahlausrichtenden Baugruppe.

Aus der US 2018/193955 A1 ist ein additives Fertigungssystem zum Herstellen einer Komponente unter Verwendung eines Laserarrays mit einem ungleichförmigen Energieintensitätsprofil bekannt,

Aus der JP 2004 314406 A ist ein Verfahren und eine Anlage zur optischen Mikroformung mit variabler Schichtdicke bekannt, bei der die Apertur einer Linse je nach Schichtdicke vergrößert oder verkleinert wird, um die Lichtintensität zu verändern.

Aus der KR 101 740 266 B1 ist eine Vorrichtung zur dreidimensionalen Strukturbearbeitung mit verbesserter Geschwindigkeit unter Beibehaltung von Maßgenauigkeit und Verbundfestigkeit von Schichten bekannt, bei der der Durchmesser eines Laserstrahlfokusses angepasst wird.

Aufgabe der vorliegenden Erfindung ist es, eine kostengünstige Fertigung qualitativ hochwertiger Bauteile zu ermöglichen.

Die Lösung dieser Aufgabe wird in unabhängiger Form beansprucht. Bevorzugte Ausführungsformen finden sich in den Unteransprüchen.

Gemäß einem ersten Grundgedanken der Erfindung wird ein 3D-Bauteildruckverfahren vorgeschlagen, bei welchem ein Körper aus Ausgangsmaterial aufgebaut wird, das spurenweise mit einem Strahl bestrahlt wird, der ein wirksames Flächenprofil hat, das nicht rotationssymmetrisch ist. Das wirksame Flächenprofil des Strahls wird hierbei der Spurrichtung entsprechend und/oder folgend ausgerichtet. Als wirksames Flächenprofil kann derjenige Bereich bezeichnet werden, in dem ein Aufbau, ein Aufschmelzen, ein Aushärten und/oder ein Erwärmen von Ausgangsmaterial erfolgt. So kann z.B. als wirksames Flächenprofil derjenige Bereich bezeichnet werden, in dem ein pulverförmiges Ausgangsmaterial erwärmt und/oder aufgeschmolzen wird, um nach dessen erneuter Erstarrung eine entsprechende Ablagerung entlang der Spur zu erreichen (sogenannte Hatches).

Um das Ausgangsmaterial so zu verändern, dass der Körper aufgebaut wird, können unterschiedliche Strahlen verwendet werden. Bei polymerisationsfähigen Flüssigkeiten ist insbesondere eine Bestrahlung mit UV-Licht oder dergleichen möglich, dessen Energieeintrag lediglich zum lokalen Auslösen der Polymerisation ausreichend sein muss. Andere Ausgangsmaterialien, wie etwa pulverförmige Ausgangsmaterialien (z.B. metallische Materialien), müssen häufig mit hinreichend hochenergetischen Strahlen aufgeschmolzen werden, wie z.B. mit Elektronenstrahlen, lonenstrahlen oder Laserstrahlen hoher Strahlintensität. Es wird einsichtig sein, dass Strahlen häufig einen je nach Fokus mehr oder weniger großen Zentralbereich und darum herum einen Bereich geringerer Intensität aufweisen werden, in dem die Strahlintensität, also die Leistung pro Fläche, schnell abfällt und der nicht geeignet ist, beim Aufbau des Körpers aus Ausgangsmaterial in erheblichem Maße beizutragen. Wie groß der wirksame Bereich ist, wird dabei unter anderem von der Gesamt-Strahlleistung, der Fokussierung, der Strahlgeschwindigkeit und dem Material abhängen.

Bei herkömmlichen Laserstrahl-Bauteiledruckverfahren wird das wirksame Flächenprofil jenes sein, an welchem das pulverförmige Ausgangsmaterial aufgeschmolzen bzw. versintert wird. Es wird einsichtig sein, dass in den seltensten Fällen der Strahl vollständig rotationssymetrisch sein wird. Einerseits wird der Strahl oftmals, besonders bei großen zu bildenden Körpern von einer zentralen Stelle oberhalb einer Aufbauebene umgelenkt, um den Aufbau des Körpers aus Ausgangsmaterial entfernt vom Zentrum der Bearbeitungsfläche zu bewirken. Unterstellt man einen bei senkrechtem Einfall kreisrunden Strahlquerschnitt, so wird an den Ecken bei geneigten Strahl eine Abweichung von der Rotationssymmetrie ohne besondere optische Maßnahmen zu beobachten sein, solche geringen Abweichungen sollen aber außer Betracht bleiben. Als nicht rotationssymmetrisch wird im Rahmen der Erfindung das Flächenprofil daher vorliegend insbesondere erst dann verstanden, wenn die Abweichungen von einer reinen Rotationssymmetrie über diesen Effekt hinausgehen, insbesondere dergestalt, dass die Abweichungen der Strahlintensität von einer reinen Rotationssymmetrie für wenigstens 10 % des wirksamen Flächenprofils wenigstens 10 % größer sind, bevorzugt wenigstens 20 % größer als durch den beschriebenen Effekt. Es liegt mit anderen Worten selbst bei senkrechtem Schnitt durch den Strahl ein bewusst und gezielt durch geeignete Maßnahmen von der Rotationssymmetrie abweichendes Flächenprofil vor. Dieses nichtrotationssymmetrische Flächenprofil wird dann erfindungsgemäß entsprechend der Spur des Strahls ausgerichtet. Ein solches nichtrotationssymmetrisches Flächenprofil kann z.B. bereits vor einem Galvanometer, mit dem der Strahl in der Bearbeitungsebene umgelenkt wird, vorliegen. Es wird nachfolgend ersichtlich werden, dass die Ausrichtung durch geeignete strahlformende, strahllenkende oder strahllimitierende Anordnungen erzielt werden kann.

Es wurde erkannt, dass durch eine solche Vorgehensweise Bauteile hoher Qualität besonders schnell produziert werden können, und zwar weitgehend unabhängig von der aktuellen Ausrichtung der Bahn, etwa dort, wo die Bahn gekrümmt ist. Die Erfindung ist ohne weiteres für die Verwendung mit geraden Bahnen ausgelegt und bietet z.B. auch dort Vorteile, wo der Körper mittels in einer jeweiligen Bearbeitungsebene im Wesentlichen parallelen Bahnen aufgebaut wird (die Hatches aus aufgebautem Material bilden), wobei die Bahnen unterschiedlicher Bearbeitungsebenen (insbesondere die Bahnen unmittelbar aufeinanderfolgender Bearbeitungsebenen) vorzugsweise schräg und/oder kreuzweise zueinander verlaufen (z.B. unter einem Winkel von 90°, 60° oder einer Primzahl). Hier stellt die Ausrichtung des Flächenprofils sicher, dass mit praktisch gleichbleibender Strahlenergie in jeder Lage und mit gleichen Strahlgeschwindigkeiten gearbeitet werden kann, was vorteilhaft ist, um einen Körper mit homogenen Eigenschaften zu erhalten.

Es ist aber alternativ und/oder zusätzlich auch möglich, gekrümmte Bahnen abzufahren und dabei das wirksame Flächenprofil jeweils entsprechend des Bahnverlaufs auszurichten. Dass auch dabei Bauteile hoher Qualität schnell und weitgehend unabhängig vom Krümmungsradius der Bahn produziert werden können, sei betont. Wo der Krümmungsradius sehr groß gegen die Breite des Strahls ist, wird selbst dort, wo Bögen um 90° erforderlich sind, bei gleichbleibender Überstreichgeschwindigkeit eine über die Gesamtbahnfläche nahezu gleichmäßige Erwärmung erhalten. Durch die Strahldrehung ist die Strahlbreite selbst dabei auch nicht stellenweise tangential ausgerichtet, sondern es wird stets mit nahezu gleicher Leistungsdichte entlang der Bahn gearbeitet.

Ein sonst womöglich erforderliches Beenden einer Scanbahn und ein Neuausrichten des Werkstückes, das nicht nur Zeit kostet, sondern auch Probleme am Bahnbeginn verursachen kann, wird so entbehrlich. Damit bieten sich bei Bogenlinien, die großen Winkeln entsprechen, ohne weiteres Vorteile. Dies ist besonders der Fall, wenn die Bogenlinie Winkel von mindestens 20°, bevorzugt von über 30°, insbesondere von über 45° einschließt.

Es bieten sich aber nicht nur Vorteile bei Bogenlinien, d.h. Teile von Kreislinien, sondern auch bei allgemein gekrümmten Bahnen. Es sei insbesondere darauf hingewiesen, dass es möglich ist, auch bei gekrümmten Linien Strahlen von Ebene zu Ebene so zu führen, dass sich die Linien bzw. Hatches an den Ebenen wiederholt schneiden und nicht etwa in verschiedenen Ebenen unvorteilhaft weitgehend parallel laufen.

Es ist zudem auch möglich, bei kleinen Bögen eine unerwartet hohe Qualität zu gewährleisten. Zwar wird beim Abfahren von Bögen mit kleinem Radius im radial innenliegenden Bereich mehr Energie zugeführt, was dort per se eine höhere Temperatur mit sich bringen könnte. Wo das Zentrum der Bögen seitlich vom Strahl liegt, kommen allerdings mehrere mildernde Effekte zusammen. Zum einen ist der Quer-Wärmeabfluss größer, weil Wärme auch quer abfließen kann. Dies gilt bereits für den Aufbau von Wandungen, in besonderem Masse aber für Innenvolumina, wo die Spur neben bereits vorhandenes, kompaktiertes Material gesetzt werden soll. Dort erfolgt eine Wärmeabfuhr nicht nur nach unten, sondern auch seitlich in dieses Material hinein. Zum anderen ist die Strahlintensität am Rand oftmals ohnehin geringer, sofern nicht besondere Maßnahmen ergriffen werden müssen.

Wie stark ein solcher Randabfall im Idealfall sein soll, wird unter anderem von dem aufzuschmelzenden Material abhängen. Da die Hatches sich partiell überlappen müssen, sollte der Randabfall so gewählt sein, dass am Rand zwar ein hinreichend tiefes Aufschmelzen oder dergleichen des Materials erfolgt, zugleich aber durch das Aufschmelzen keine nachteilige Materialveränderung bedingt wird.

Selbst dort, wo das Zentrum von Bögen innerhalb der Linie liegt, erweist sich der etwas höhere Energieeintrag im Regelfall als unkritisch, weil Bögen mit derart engen Radien meist kurz sind, also die Gesamtdauer der Bestrahlung kurz sein wird und damit der zusätzliche Energieeintrag gering bleibt.

Es kann vorteilhaft sein, wenn bei dem 3D-Bauteildruckverfahren das wirksame Flächenprofil quer zur Spurrichtung eine Breite B1 und in Spurrichtung eine Breite B2 aufweist, wobei B1 ≥ 1,5 B2, vorzugsweise B1 ≥ 3 B2 oder B1 ≥ 5 B2, ist. Es wird also typisch ein quer zur Bahn breit gestreckter wirksamer Strahl gewünscht. Ein hinreichend breiter Strahl, der ein hinreichend breites wirksames Flächenprofil quer zur Spurrichtung aufweist, ist vorteilhaft, weil die gleiche Fläche mit weniger Spuren überquert werden kann. Zugleich ist heutzutage oftmals schon die Strahlgeschwindigkeit entlang der Spur nicht bestimmt durch die Dauer, binnen welcher dem Ausgangsmaterial die zum Körperaufbau erforderliche Energie zugeführt werden kann; vielmehr ist bereits heute oftmals Sorge dafür zu tragen, dass das Ausgangsmaterial nicht zu schnell erwärmt wird, weil dies zu unerwünschtem Spritzen führt, was die Qualität des gedruckten Körpers beeinträchtigen könnte. Ein besonders breiter Strahl ist insoweit vorteilhaft. Aus diesem Grund sind Strahlen bevorzugt, die quer zur Spurrichtung wenigstens dreifach breiter als in Spurrichtung sind, wohingegen bei zu geringen Strahlbreiten der zusätzliche Aufwand der Orientierung des wirksamen Flächenprofils sich weniger auszahlt. Es wird einzuschätzen sein, dass dort, wo besonders massive Körper gebaut werden sollen, die gerade im Körperinneren große Volumina aufweisen, besonders breite Strahlen vorteilhaft sind. Hier können die wirksamen Flächenprofile quer zur Spurrichtung oftmals auch größer als das 5- oder 10-fache der Breite in Spurrichtung sein. Wie vorerwähnt können auch Strahlen erzeugt werden, die eine Breite von z.B. 30:1 aufweisen, und es wird einzuschätzen sein, dass sogar Strahlen mit einem Verhältnis von über 40:1, über 50:1, über 60:1, über 70:1, über 80:1, über 90:1 oder über 100:1 verwendbar sind. Es sei erwähnt, dass zusätzlich zu einem recht breiten Flächenprofil auch eine Vorbehandlungszone vorgesehen sein kann, in welcher Material beispielsweise vor seinem Aufschmelzen vorerwärmt wird, um die Erwärmung selbst dann weniger schlagartig erfolgen zu lassen, wenn sehr hohe Strahlgeschwindigkeiten gewählt werden.

Es ist insgesamt vorteilhaft, wenn die Breite B1 des wirksamen Flächenprofils, an dem z.B. ein Aufschmelzen von Pulvermaterial erfolgt, mindestens 1,5 mm mindestens 2 mm mindestens 3 mm, mindestens 5 mm oder mindestens 10 mm beträgt. Dass mit Fortschreiten der zugänglichen Laserleistung und der Leistungsbeständigkeit der zur Strahlumlenkung und/oder -formung verwendeten Elemente, insbesondere optischen Elemente, noch größere Breiten wie beispielsweise 5 mm, 10 mm, 15 mm oder 20 mm oder jeweils darüber sinnvoll gewählt werden können, sei als möglich offenbart. Mit derart breiten Strahlen werden, hinreichende Leistung vorausgesetzt, bevorzugt Strahlgeschwindigkeiten von wenigstens 300 mm/sec entlang der Bahn, bevorzugt über 600 mm/sec und insbesondere über 1000 mm/sec verwendet, insbesondere dort, wo als Ausgangsmaterial Metallpulver, Metallcarbidpulver, Metallnitridpulver und/oder zu versinternde Keramikpulver (etwa Metalloxidkeramikpulver) verwendet werden.

In Spurrichtung wird in einem bevorzugten Ausführungsbeispiel die Breite B2 wenigstens 0,1 mm, vorzugsweise mindestens 0,5 mm betragen. Wo die Breite B2 so gering ist wie 0,1 mm und hochschmelzendes Ausgangsmaterial verwendet wird, wird die Aufwärmgeschwindigkeit sehr hoch sein, was insbesondere dort, wo zunächst Oxidschichten des Ausgangsmaterials durch die Erwärmung überwunden werden müssen, zu Spritzen führen kann. Eine Länge von wenigstens 0,5 mm ist, insbesondere bei Strahlgeschwindigkeiten entlang der Bahn von um oder über 50 mm/sec, 100 mm/sec, 300 mm/sec, 450 mm/sec oder 600 mm/sec besonders vorteilhaft. Es sei angemerkt, dass große Strahlen auch für die Verwendung beim Aufbau des Körperinneren, also beispielsweise des Bereiches in hinreichendem Abstand von Wandungen verwendbar sind, wohingegen die Außenbereiche wie Wandungen gegebenenfalls auch mit einem anderen kleineren Strahl erzeugbar sind. Dies hat einerseits Vorteile, weil im Außenbereich, das heißt für die "Haut" oder Oberfläche des Körpers weniger Leistung eingestrahlt werden muss und zudem gegebenenfalls eine feinere Strahlführung gewünscht wird, um erforderliche Nachbehandlungsschritte zu reduzieren. Auch ist es möglich, gegebenenfalls unterschiedlich viel Energie dort einzustrahlen, wo durch unterschiedliche Kornbildung, erfolgendes oder nicht erfolgendes Wiederaufschmelzen von Material, usw. bestimmte Materialeigenschaften erzielt werden sollen. So kann etwa durch Wahl geeigneter Strahlleistungsparameter wie Strahlgeschwindigkeit und Strahlbreite ein bestimmtes Aufschmelzverhalten erreicht werden, Eutektika können gebildet werden usw. Eine erfindungsgemäße 3D-Druckmaschine kann insofern zwei Laser unterschiedlicher Leistung aufweisen, z.B. einen ersten Laser mit einer Leistung von mindestens 2 kW, mindestens 4 kW oder mindestens 8 kW und einen zweiten Laser mit einer Leistung von weniger als 800 W, vorzugsweise weniger als 400 W oder weniger als 200 W.

In einer besonders bevorzugten Ausführungsform wird das 3D-Bauteildruckverfahren dergestalt durchgeführt, dass der Strahl auf einer zumindest bereichsweise gekrümmten Bahn geführt wird. Das wirksame Flächenprofil kann dann entsprechend der Krümmung der Spur simultan mit dem Abfahren der Spur orientiert werden.

Es sei diesbezüglich darauf hingewiesen, dass beim 3D-Druck im Regelfall die Druckbahnen vorab bekannt sind, etwa weil sie auf Basis eines bekannten CAD-Entwurfes vorab festgelegt werden. Auf diese Weise kann besonders einfach vermieden werden, dass Hatches in unterschiedlichen Ebenen zu lange parallel laufen. Es ist prinzipiell möglich, entweder mit dem Strahl gekrümmte Bahnen abzufahren und das wirksame Flächenprofil demgemäß zu drehen, und/oder es ist möglich, die Bahnausrichtung zunächst insbesondere ebenenweise zu bestimmen und dann den Strahl entsprechend einer Vorabplanung zu drehen.

Die Formung des Strahls zu einem nicht rotationssymmetrischen Flächenprofil kann durch unterschiedliche Mechanismen und/oder Bauteile erreicht werden, z.B. durch eine Freiformoptik, ein Flüssigkristall-SLM, eine akustooptische Strahlformer und/oder ein diffraktives optisches Element (DOE). Gemäss den Ansprüchen wird mindestens ein DOE verwendet. Manche dieser Mechanismen und/oder Bauteile erlauben ohne Weiteres auch eine Drehung des erzeugten und/oder zu erzeugenden Flächenprofils (etwa Flüssigkristall-SLM oder akustooptische Strahlformer). Andere Bauteile (etwa diffraktive optische Elemente) können zur Drehung des Strahls selbst gedreht oder auch ausgetauscht werden. Insofern kann eine Strahlformungseinrichtung vorhanden sein, die im Strahlgang angeordnet wird. Die Strahlformungseinrichtung kann austauschbar sein. Alternativ oder zusätzlich kann die Strahlformungseinrichtung drehbar sein, etwa durch eine zusätzliche Strahlformungsdreheinrichtung.

Eine Änderung der Form und/oder Orientierung des Flächenprofils wird durch Wechsel verschiedener diffraktiver optischer Elemente erreicht, wozu auf unterschiedliche DOEs in einem Magazin zugegriffen wird. So kann die Änderung der Form und/oder Orientierung des Flächenprofils z.B. von Bearbeitungsebene zu Bearbeitungsebene geschehen. Es ist aber auch möglich, die Form und/oder Orientierung des Flächenprofils in einer bestimmten Bearbeitungsebene vorzunehmen, je nach verwendeter Strahlformungseinrichtung und/oder Strahlformungsdreheinrichtung auch in Echtzeit.

Das 3D-Bauteildruckverfahren ist derart ausgeführt, dass das wirksame Flächenprofil simultan während des spurenweisen Bestrahlens gedreht wird. Diffraktive optische Elemente können wahlweise gegeneinander ausgetauscht werden, um die Ausrichtung des wirksamen Flächenprofils zu bewirken. Im Rahmen der Erfindung werden die diffraktiven optischen Elemente selbst gedreht, z.B. mit einer geeigneten Mechanik. Es ist vorteilhaft, dort, wo diffraktive optische Elemente alleine das wirksame Flächenprofil aus einem Eingangsstrahl formen, ein kreisrundes Eingangsprofil zu verwenden, so dass die Ausrichtung des wirksamen Flächenprofils dann nur von der mechanischen Orientierung des diffraktiven optischen Elementes abhängt. Das diffraktive optische Element in einem solchen Fall kann beispielsweise gesteuert gedreht werden.

Aus dem oben Ausgeführten wird ersichtlich sein, dass Abweichungen zwischen dem Bahnverlauf und der Orientierung des wirksamen Flächenprofils durchaus auftreten können, ohne dass von der Erfindung abgewichen wird. Es können Abweichungen einerseits auftreten, weil die Drehung des wirksamen Flächenprofils, wie etwa bei Matrixdioden, nicht hinreichend feingestuft erfolgt, weil die mechanische Nachführung des diffraktiven optischen Elementes nicht völlig präzise ist und/oder weil ein zeitlicher Versatz zwischen der Strahlführung auf der Bahn und dem Drehen von Linsen, diffraktiven optischen Elementen und so weiter auftritt. Es wird aber einzusehen sein, dass derartige Abweichungen bevorzugt unter 45°, besonders bevorzugt unter 30°, insbesondere bevorzugt unter 15° und typisch im Bereich nicht über 10°, bei qualitativ besonders hochwertigen Anlagen auch unter 5° Abweichung liegen.

Es wird einzusehen sein, dass bei sehr großen Abweichungen die Vorteile der Erfindung nicht vollumfänglich zu erhalten sind, während sich sehr kleine Abweichungen kaum auswirken, also selbst dort, wo im Grenzbereich der möglichen Geschwindigkeiten und/oder Energien gearbeitet wird, nicht notwendigerweise Vorteile aus einer besonders hohen Genauigkeit erhalten werden. Die zulässigen Toleranzen können leistungsabhängig sein, allgemein sind aber bei aktuell verfügbaren Leistungen von 5 bis 10 kW auch bei Strahlgeschwindigkeiten >600 mm Abweichungen zwischen 5° bis 12°, bevorzugt zwischen 8° und 10° gut vertretbar, ohne wesentliche Vorteile der Erfindung zu verlieren.

Es sei im Übrigen erwähnt, dass verschiedene Maßnahmen zur Erzeugung und Orientierung eines wirksamen Flächenprofils, das einer Bahn entsprechend orientiert wird, möglich sind. So könnte eine Diodenmatrix mit dem diffraktiven optischen Element und Zylinderlinsen kombiniert werden und so weiter.

Es kann vorteilhaft sein, wenn das 3D Bauteildruckverfahren derart ausgeführt wird, dass Ausgangsmaterial durch die Bestrahlung aufgeschmolzen wird und ein Profil der ausgangsmaterialaufschmelzenden Strahlintensität quer zur Spur mindestens 1,5-fach breiter als in Richtung der Spur ist, bevorzugt mindestens zweifach breiter, besonders bevorzugt mindestens dreifach breiter, in besonders bevorzugten Varianten auch mindestens 4-fach, 5-fach oder 10-fach breiter.

Es sei zunächst darauf hingewiesen, dass nicht alleine der Strahl dazu dienen muss, etwa beim selektiven Lasersintern an das pulverförmige Material bis zur Verbindung mit anderem Material zu erwärmen. Vielmehr reicht es, das teilgebildete Bauteil und/oder das Pulvermaterial erheblich aufzuwärmen und dann nur noch eine geringe Menge zusätzliche Energie zum Aufschmelzen durch die Bestrahlung einzubringen. Dies erlaubt bereits mit heute erreichbaren Strahlleistungen die Verwendung recht breiter Strahlen selbst dann, wenn hohe Spurgeschwindigkeiten gewünscht sind. Dies ist sinnvoll, wenn quer zur Spur in erheblicher Breite Material aufgeschmolzen bzw. zur Verbindung mit anderem Material hinreichend stark mit Energie beaufschlagt wird. Die Wirtschaftlichkeit wird größer, wenn die materialaufschmelzende Strahlintensität quer zur Spur wenigstens 1,5-fach breiter als in Richtung der Spur ist, vorzugsweise wenigstens 2-fach, 3-fach oder 5-fach. Die Vorerwärmung verbessert die Verwendbarkeit besonders breiter Strahlen. Es wird einzuschätzen sein, dass z.B. eine auch 10-fache Verbreiterung erzielbar ist, wobei durch die Strahlausrichtung regelmäßig ungeachtet sehr hoher eingetragener Leistungen gewährleistet ist, dass das Material wie erforderlich aufgeschmolzen bzw. zur Verbindung mit anderem Material beaufschlagt wird, besonders, wenn vorerwärmt bzw. außer durch Strahlen zusätzlich erwärmt wird.

Dort, wo die Strahlen besonders breit sind, ist es vorteilhaft, eine besonders gute Ausrichtung zu erzielen. Daher wird es besonders bevorzugt sein, wenn bei einem wenigstens dreifach breiteren Strahl die Abweichung der tatsächlichen Drehung des wirksamen Flächenprofils während des spurweisen Bestrahlens unter 25°, bevorzugt unter 15° liegt. Wo der Strahl wenigstens 5-fach breiter ist, ist es bevorzugt, die Orientierung auf mindestens 15° genau auszurichten. Es sei darauf hingewiesen, dass bei sehr breiten Strahlen gleichwohl Bahngeschwindigkeiten von über 60 cm/sec, bevorzugt über 1 m/sec (z.B. für Al-Si Legierungen) und/oder Bahngeschwindigkeiten von über 50 mm/sec, bevorzugt über 150 mm/sec (z.B. für Al-Cu Legierungen) erreichbar sind.

Durch die Verbreiterung des Strahls wird unter anderem erreicht, dass sich das Spritzverhalten des erwärmenden Materials verändert, weil der Gradient zur Seite nicht so hoch ist. Zugleich kann eine Vorheizung des Materials vor dem eigentlichen intensiven Laserstrahl erfolgen, was in Bahnrichtung das Spritzen reduzieren kann. Es ist zugleich vorteilhaft, wenn nach dem erfindungsgemäßen 3D-Bauteildruckverfahren dem Bereich des Profils, mit welchem Ausgangsmaterial aufgeschmolzen wird, in Strahlbewegungsrichtung, also in Richtung der Bahn, ein Vorwärmbereich geringerer Intensität vorausgeht und/oder ein Bereich geringerer Intensität nachfolgt. Die Verwendung eines Strahls mit Vorheizzone schließt nicht aus, dass das aufzuschmelzende Material zusätzlich auf andere Art und Weise vorerwärmt wird. Es sei erwähnt, dass eine Vorheizung auch in lokalen Bereichen geschehen kann, die aber deutlich größer als der Fokusbereich des Aufschmelzstrahls sind. Erwähnt seien etwa eine induktive Beheizung mit einer über die aufzuschmelzende Schicht zu führenden Spule, eine Erwärmung mit einem separaten, ausgedehnten Strahl usw.

Ein Nachwärmbereich kann dazu beitragen, dass dort, wo Material in größerem Umfang aufgeschmolzen wird, der Erstarrungsprozess langsamer abläuft, was die Kornbildung beeinflusst und gegebenenfalls auch die weiteren Materialeigenschaften des durch das additive Verfahren zu bildenden Körpers.

Es ist nicht zwingend, dass die Strahlintensität quer zur Strahlbewegungsrichtung innerhalb jenes Bereiches des Strahlprofils, der intensiv genug ist, Ausgangsmaterial aufzuschmelzen, homogen ist. Vielmehr ist es auch möglich, ein Profil beispielsweise mit Zwischenintensitätsmaxima zu verwenden oder sogar getrennte Bereiche zu verwenden, in welchen eine Materialaufschmelzung erfolgt, während im Zwischenbereich kein Material aufgeschmolzen wird. Das Nichtaufschmelzen von Material an bestimmten Stellen aufgrund einer zu geringen Strahlintensität kann gezielt dort eingesetzt werden, wo ein nicht kompakter Körper gewünscht ist. Zudem kann gegebenenfalls erreicht werden, dass im Bereich höherer Intensität aufgeschmolzenes Material zu Bereichen strömt, in welchen das Material nicht aufgeschmolzen wurde. Die dabei erfolgende Wärmeübertragung kann auch an diesen Stellen zu einem Aufschmelzen führen, sodass insgesamt bei gleicher Strahlleistung ein besonders breiter Strahl verwendbar wäre.

Sofern ein quer zur Bahn nicht homogener Strahl verwendet wird, sondern ein Strahl, der quer zur Bahn Intensitätsspitzen aufweist, ist es vorteilhaft, wenn die Intensität an diesen Intensitätsspitzen mindestens 1,3-fach, vorzugsweise mindestens 1,5-fach, besonders bevorzugt wenigstens zweifach höher als entlang des Bereiches quer zur Bahn ist, in welchem die Intensität zum Ausgangsmaterialaufschmelzen ausreicht. Es sei erwähnt, dass partielle Intensitätsüberhöhungen auch dazu führen können, dass bereichsweise eine bessere Verbindung zu unter der aktuellen Bahn liegenden Bahnen erreicht wird, also eine insgesamt bessere Hatch-Verbindung bewirkt wird.

Dort, wo der breite Strahl quer zur Bahn keine homogene Leistungsverteilung in jenem Bereich hat, in welchem Material aufgeschmolzen wird, kann es vorteilhaft sein, wenn an den äußersten Abschnitten die Strahlintensität höher ist als in der Strahlmitte. Dies kann deshalb vorteilhaft sein, weil der Energieabfluss zum Rand hin größer ist, so dass dort mehr Energie zum Aufschmelzen benötigt werden könnte. Bei einer solchen Bestimmung der mittleren Strahlintensität kann typisch die Strahlintensität quer zu Strahlbewegungsrichtung über einen Bereich gemittelt werden, der immer noch klein gegen die Gesamtstrahlbreite ist, beispielsweise durch Mittelung über wenigstens 0,1 mm, vorzugsweise 0,2 mm, besonders bevorzugt über 0,3 mm gemittelt, wohingegen eine Gesamtstrahlbreite von über 1 mm, bevorzugt über 2 mm, insbesondere bevorzugt über 3 oder 5 mm verwendet wird.

Die Spur, auf welcher der Strahl geführt wird, wird in bevorzugten Ausführungsformen zumindest bereichsweise gekrümmt sein. Es ist gegebenenfalls möglich, eine mittlere Strahlintensität in einem solchen Fall entlang eines zur Spur radial äußersten Abschnittes des Profilbereichs Ausgangsmaterial aufschmelzender Strahlintensität größer als die mittlere Strahlintensität entlang eines zur Spur radial innersten Abschnittes zu wählen. Mit anderen Worten wird dort, wo sich der Strahl aufgrund der Strahlbahnkrümmung schneller bewegt, eine höhere Leistungsdichte verwendet. Dies ist etwa mit einzeln steuerbaren Dioden einer Diodenarrayanordnung ohne weiteres möglich, jedoch ebenfalls bei Verwendung eines entsprechenden diffraktiven optischen Elements. Wiederum kann davon ausgegangen werden, dass die Strahlintensität entsprechend an den jeweiligen äußeren bzw. inneren Radiusbereichen erhöht bzw. abgesenkt ist, wenn eine mittlere Strahlintensität niedriger ist, beispielsweise gemittelt quer zur Strahlbewegungsrichtung über eine Länge von 0,1 mm, vorzugsweise 0,2 mm oder 0,3 mm, wie zuvor.

Das additive Verfahren, d.h. das 3D-Bauteildruckverfahren kann in einer besonders bevorzugten Ausführungsform mit einem optischen Strahl durchgeführt werden, insbesondere bevorzugt mit einem Laserstrahl, bevorzugt einem Dauerstrichlaserstrahl. Es sei darauf hingewiesen, dass es alternativ möglich ist, auch Teilchenstrahlen, beispielsweise Elektronenstrahlen oder lonenstrahlen hinreichender Stromstärke und Energie zu verwenden.

Dort, wo der Strahl mittels eines Lasers erzeugt wird, kann dieser Laser einer Ausgangsleistung von mindestens 5 kW, bevorzugt mindestens 8 kW, insbesondere mindestens 10 kW besitzen. Es wird einzuschätzen sein, dass die erzielbare Strahlbreite, die technologisch als besonders vorteilhaft angesehen wird, von der Ausgangsleistung des Strahls abhängen wird. So kann eine höhere Leistung dazu führen, dass ein vorteilhaft breiter Strahl mit vorteilhaft hoher Bahngeschwindigkeit verwendbar ist.

Es ist möglich, mehrere Strahlformungseinrichtungen räumlich hintereinander zu setzen und/oder sie zeitlich nacheinander zu verwenden. Auch ist es möglich, die Strahlformeinrichtungen nicht nur zu Erzielung unterschiedlicher Ausrichtungen auszutauschen, sondern auch unterschiedliche Linienbreiten durch unterschiedliche Strahlformungseinrichtungen vorzusehen. Dies kann insbesondere geschehen, um Innenvolumina mit breiteren Strahlen zu erzeugen, während Randbereiche, Wandungen usw. mit relativ schmalen Strahlen erzeugt werden, die eine höhere Oberflächenqualität produzieren. Gemäß den Ansprüchen wird dies durch Unterbringung der diffraktiven optischen Elemente in einem Magazin (z.B. einem revolverartig drehbaren Magazin oder einem linearen Magazin), aus welchem jeweils ein DOE oder einige wenige DOE entnommen werden geschehen. Auch ist es möglich, die Strahlformungseinrichtungen leistungsabhängig zu wählen. Alternativ oder zusätzlich kann die Strahlformungseinrichtung (bzw. das oder die DOE) in Abhängigkeit des zu bearbeitenden Materials gewählt werden.

Die Strahlformungseinrichtung weist wenigstens ein diffraktives optisches Element auf. Dort, wo strahlengeladene Teilchen wie Elektronen oder Ionen verwendet werden, wird eine Strahlformungseinrichtung typisch mit Magneten aufgebaut sein.

Wie vorerwähnt, kann bei einem erfindungsgemäßen Bauteildruckverfahren die Strahlformeinrichtung zur Strahlausrichtung gedreht werden. Dies ist jedoch nicht zwingend. Es ist auch möglich, die Strahlquelle zu drehen oder, etwa dort, wo ein Laserstrahl über eine Glasfaser an einen 3D-Druckbereich geführt wird, die Glasfaser bzw. den Auskoppler zu drehen. Dass die gesamte Strahlquelle ebenfalls drehbar ist, wurde am Beispiel eines linearen Laserdiodenarrays bereits angegeben.

Die Erfindung umfasst eine strahlausrichtende Baugruppe gemäß Anspruch 9.

Eine solche strahlausrichtende Baugruppe wird typisch eine Steuerung aufweisen bzw. einen Steuereingang, um den Strahl entlang einer zumindest bereichsweise gekrümmten Spur zu lenken und dann das wirksame Flächenprofil dabei entsprechend der Spurkrümmung zu orientieren. Es sei erwähnt, dass typisch die Lenkung des Strahls und die Drehung des Strahls bevorzugt gegenüber einer Bauteildrehung ist.

Weiter sei darauf hingewiesen, dass gegebenenfalls eine 3D-Druckmaschine mit mehr als einem einzelnen, unabhängig bewegbaren Strahl betrieben werden kann. Wo dies der Fall ist, kann es ausreichen, lediglich einen der Strahlen auf die erfindungsgemäße Weise auszurichten.

Es sei darauf hingewiesen, dass verschiedene Strahlquellen selbst orientierbar sind, um die gewünschte ausgerichtete Bestrahlung des Ausgangsmaterials zu bewirken. Hingewiesen sei etwa auf Elektronen, Positronen, Protonen, Helium, aber auch schwerere Ionen usw.

Die Erfindung wird im Folgenden nur beispielhaft anhand der Zeichnung beschrieben. In dieser ist dargestellt durch
- **Figur 1**: die Strahllenkeinheit einer erfindungsgemäßen 3D-Druckmaschine;
- **Figur 2**: eine Kollimator-Einheit mit Faseradapter und Aufnahme für eine erfindungsgemäße strahlausrichtende Baugruppe gemäß Detail A von Figur 1;
- **Figur 3a**: eine Detailansicht einer zur Strahlorientierung verwendeten strahlausrichtenden Baugruppe;
- **Figur 3b**: ein Detail dazu;
- **Figur 4a**: eine Anordnung gemäß den Ansprüchen mit einem rotierbaren Magazin für unterschiedliche diffraktive optische Elemente, die wechselweise und/oder in Kombination in einen optischen Strahlengang einer 3D-Druckmaschine eingebracht werden können, um unterschiedliche Formungen und/oder Orientierungen des Strahls zu erreichen;
- **Figur 4b**: eine alternative Ausführungsform gemäß den Ansprüchen für eine strahlausrichtende Baugruppe mit einem linearen Magazin, aus welchem ebenfalls unterschiedliche diffraktive optische Elemente entnommen werden können, um diese zur Strahlformung und/oder Strahlorientierung in den Strahlengang zu bewegen.

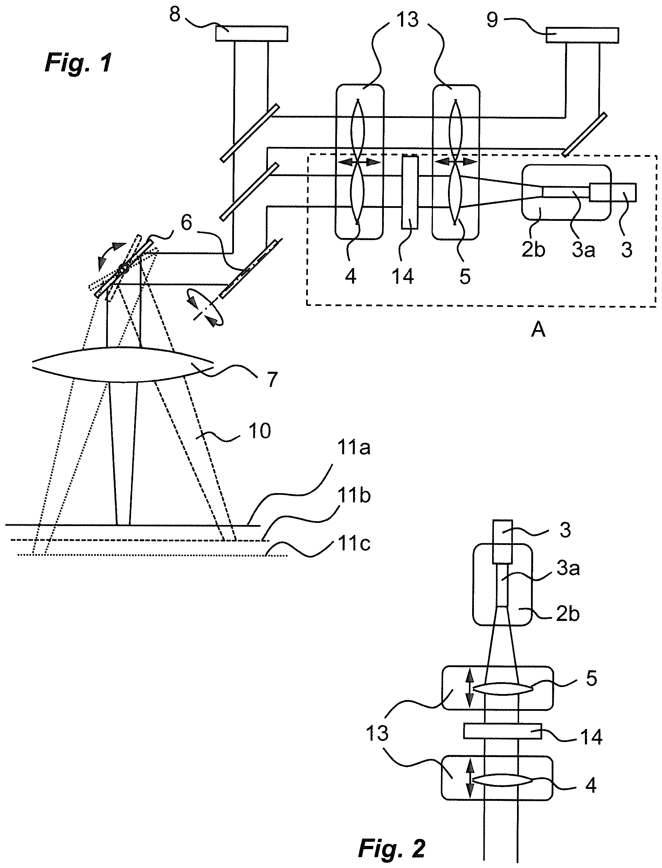

Nach Figur 1 umfasst eine Strahlform- und Lenkeinheit eines 3D-Druckers, mit dem additiv ein Körper aus Ausgangsmaterial aufgebaut werden kann, indem dieses spurenweise mit einem Strahl bestrahlt wird, einen Anschluss 2 für eine optische Faser 3 mit einem Faserende 3a, in welche ein Laserstrahl aus einem Hochleistungslaser eingekoppelt wird, eine Zoom-Einheit 5, einen variablen Kollimator 4, eine hier als Galvanometerscanner realisierte Strahllenkeinheit 6 sowie ein Austrittsobjektiv 7, das als F-θ-Objektiv ausgebildet ist. Es sind Anschlüsse zur Prozessüberwachung 8 und ein nachgeführter Kameraport 9 vorhanden, um die Strahllenkung und Prozessführung überwachen zu können. Die entsprechende Anordnung ist im wesentlichen herkömmlich und geeignet, den Strahl 10 auf Bahnen in unterschiedlichen Bearbeitungsebenen 11a, 11b, 11c zu führen, wobei durch die Bahnen einer jeweiligen Bearbeitungsebene jeweils eine entsprechende Volumenschicht des Körpers hergestellt werden kann. Die Bahnen können gerade oder gekrümmt sein. Es sei darauf hingewiesen, dass der Strahllenkeinheit eine Steuerung zugeordnet sein kann, um entsprechend einem digitalisierten Plan für einen additiv aufzubauenden Körper den Strahl wie erforderlich spurweise zu führen, z.B. über ein Bett aus vorgeheiztem Pulver.

Die dargestellte Strahlform- und Lenkeinheit unterscheidet sie sich von herkömmlichen Einheiten eines herkömmlichen 3D-Druckers insbesondere dahingehend, dass der Strahl 10 ein wirksames Flächenprofil hat, welches nicht rotationssymmetrisch ist und der Spurrichtung entsprechend ausgerichtet werden kann. Hierzu kann eine Baugruppe 14 zur Strahlformung und/oder Strahlorientierung vorgesehen sein. Die Baugruppe 14 kann den Strahl 10 zu dem nicht rotationssymmetrischen Flächenprofil formen und, gemäß den Ansprüchen, das nicht rotationssymmetrische Flächenprofil in der Bearbeitungsebene drehen, z.B. um dieses der Spurrichtung entsprechend auszurichten. Hierfür kann z.B. eine Freiformoptik, ein Flüssigkristall-SLM, eine akustooptische Strahlformung und, gemäß den Ansprüchen, ein diffraktives optisches Element zum Einsatz kommen. Bei der beispielhaft dargestellten Ausführungsform ist ein diffraktives optisches Element 14 in den Strahlengang eingesetzt. Dies wird detaillierter mit Bezug auf Figur 2 beschrieben werden, in der beispielhaft Teile der Strahlform- und Lenkeinheit genauer dargestellt sind.

Die Faserankopplung 2 ist in Figur 2 oben dargestellt und umfasst das Faserende 3a und eine Faserbuchse 2b zur Aufnahme des Faserendes. Das Faserende 3a strahlt Licht über eine Linsenanordnung, die kollimiert und ein Zoomen erlaubt, um nachfolgend einen parallelen Strahl zu erhalten, angedeutet bei Bezugszahl 13. Die Faseranordnung und die Linsenanordnung hinter der Faseranordnung sind so gebildet, dass ein homogener Gaußstrahl mit allgemein rundem Querschnitt erhalten wird. Es versteht sich, dass reale Strahlen geringfügig von einem tatsächlichen Gaußstrahl abweichen werden, aber im aufgeweiteten Strahl jener Bereich, der fokussiert den Bereich des wirksamen Flächenprofils ergibt, um nicht mehr als 10% Leistungsdichte variieren wird.

Es ist eine Sammellinse vorgesehen, mit welcher der parallele Strahl fokussiert werden kann, um dann fokussiert auf das Ausgangsmaterial gerichtet zu werden.

Das diffraktive optische Element 14 kann z.B. in dem Bereich eingesetzt werden, in dem ein paralleler, homogener Gaußstrahl vorliegt. Das diffraktive optische Element 14 kann so ausgebildet sein, dass es das gewünschte nicht rotationssymmetrische Flächenprofil erzeugt.

Zur Orientierung und/oder Drehung dieses nicht rotationssymmetrischen Flächenprofils in der Bearbeitungsebene wird das diffraktive optische Element 14 gedreht. Um die Drehung des diffraktiven optischen Elements 14 zu ermöglichen, ist dieses so drehbar in der Baugruppe 14 angeordnet, dass die Drehung mittels der Steuerung der Maschine gezielt eingestellt werden kann.

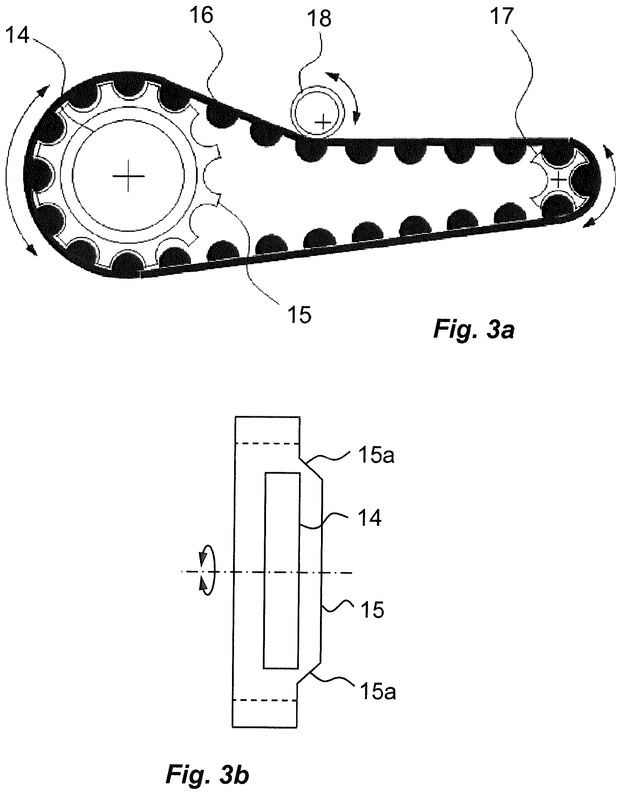

Eine solche drehbare Anordnung ist beispielhaft in Figur 3a dargestellt. Hierbei ist das diffraktive optische Element im Inneren eines Zahnrades mit Außenzahnung vorgesehen. Das Zahnrad 15 kann entlang seines Außenbereichs mit einer konischen Gleitlagerfläche 15a versehen sein (siehe Fig. 3b). Ein Zahnriemen 16 kann von der Außenverzahnung zu einem Antriebszahnrad 17 geführt werden, so dass eine Drehung des Antriebszahnrades 17 zu einer Drehung des diffraktiven optischen Elements zusammen mit dem Zahnrad 15 führt. Der Zahnriemen 16 kann z.B. mit einer Exzenterspannrolle 18 gespannt gehalten werden.

Das diffraktive optische Element selbst kann beispielsweise durch Strukturierung einer Indium-Zinnoxidschicht (ITO) auf einem Glassubstrat hergestellt werden, indem zunächst das Glassubstrat mit ITO beschichtet wird und dann eine Phasenmaske in die ITO-Schicht einstrukturiert wird. Auf diese Weise kann ein Phasenversatz bei Durchtritt von Licht durch das Glassubstrat abhängig vom Ort des Durchtritts erzeugt werden, und es sind Intensitätsverteilungen gezielt einstellbar. Es sei erwähnt, dass andere Möglichkeiten zur Herstellung eines diffraktiven optischen Elementes bestehen.

Das Antriebsrad 17 kann von einem Elektromotor, der hier als Schrittmotor ausgebildet sein kann, angetrieben werden, um eine kontrollierte Drehung des Antriebsrades 17 und, über den Zahnriemen 16 auch des Zahnrades 15, und damit eine gezielte Orientierung des diffraktiven optischen Elementes, das im Zahnrad 15 eingebaut ist, zu bewirken. Der Schrittmotor des Antriebszahnrades 17 kann von der gleichen Steuereinheit gesteuert werden, die in der Strahlform- und Lenkeinheit auch den oder die Galvanometerscanner 5 angesteuert, um den Strahl entlang einer hier insbesondere gemäß digitalisiertem Plan gekrümmten Bahn zu führen. Die Steuerung und Antriebe (nicht gezeigt) sind so ausgebildet, dass die Bahnen plangemäß in der jeweiligen Bearbeitungsebene 11a, 11b, 11c gekrümmt sein können. Das diffraktive optische Element 14 kann so strukturiert sein, dass aus dem kreissymmetrischen Profil des Strahls ein lang gestrecktes Flächenprofil erhalten wird. Die Steuerung des Antriebszahnrades 17 ist vorzugsweise so ausgebildet, dass die Strecke größter Ausdehnung des wirksamen Flächenprofils stets auf 10° genau senkrecht auf die Bahntangente steht.

Vorliegend ist die Schrittmotoransteuerung für das diffraktive optische Element 14 dazu mit dem strahllenkenden Galvanoscanner 6 entsprechend synchronisiert und wird plangemäß angesteuert.

Im vorliegenden Ausführungsbeispiel liegen die zum Drucken eines Bauteiles erforderlichen Daten, nach welchen der Strahl über das Ausgangsmaterial geführt wird, vorzugsweise in digitalisierter Form vor. Das diffraktive optische Element, welches in das Zahnrad 15 eingebaut ist, wird gemäß den Ansprüchen entsprechend der gekrümmten Strahlbahn während der Bestrahlung ausgerichtet. Damit ist kontinuierlich gewährleistet, dass das wirksame Flächenprofil des Strahls der Spurrichtung entsprechend ausgerichtet wird.

Gemäß den Ansprüchen können solche verschiedenen diffraktiven optischen Elemente verwendet werden, um den Strahl 10 unterschiedlich zu formen, d.h. um unterschiedliche wirksame Flächenprofile zu erzeugen. Die erzeugten Flächenprofile können unterschiedlich breit sein, innerhalb des jeweiligen Flächenprofils eine unterschiedliche Intensitätsverteilung haben (etwa mit Vorwärmzonen) und/oder unterschiedliche Formen aufweisen (etwa rechteckig, oval, elliptisch, halbmondförmig).

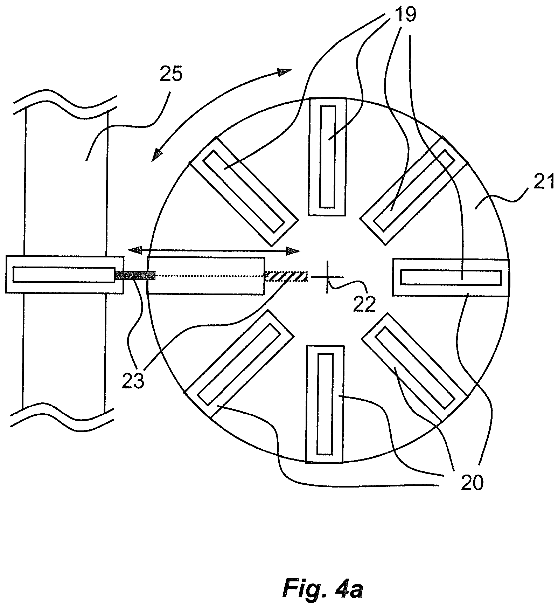

Unterschiedliche diffraktive optische Elemente werden über eine Magazinanordnung zugeführt. Eine solche Magazinanordnung ist beispielhaft in Figur 4a gezeigt. Hier sind unterschiedliche diffraktive optische Elemente 19 in Wechselmagazinhaltern 20 eines Wechselmagazins 21 angeordnet, das drehbar um eine Achse 22 ist, wobei die jeweiligen diffraktiven optischen Elemente mit einem Betätigungsmittel 23 in den optischen Strahlengang 25 eingeschoben werden können. Die in den verschiedenen, am Umfang angeordneten Haltern 20 der Anordnung 21 eingebrachten diffraktiven optischen Elemente 19 können ein wirksames Flächenprofil erzeugen, das jeweils gleich lang gestreckt, aber jeweils um einige wenige Grad gedreht ist. Damit kann bei Abfahren einer Bahn eine für die Lage dieser Bahn besonders gute Ausrichtung des Strahls vorab gewählt werden. Alternativ können die verschiedenen diffraktiven optischen Elemente 19 unterschiedliche Flächenprofile und/oder Flächenprofile mit unterschiedlicher Intensitätsverteilung erzeugen. Der Wechsel der diffraktiven optischen Elemente 19 kann automatisch erfolgen, insbesondere durch die erwähnte Steuerung entsprechend einer Voreinstellung oder entsprechend der bereitgestellten digitalen Daten.

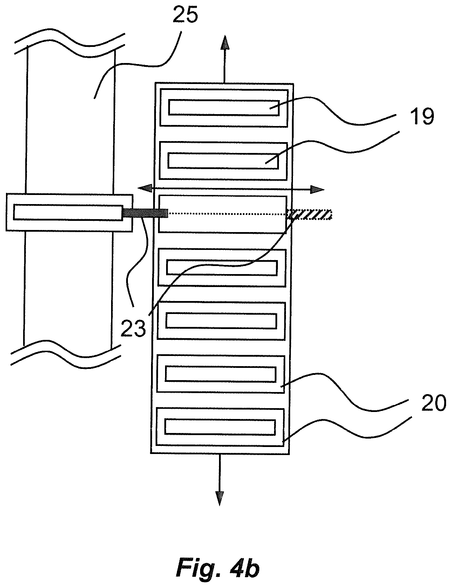

Eine weitere Möglichkeit, ein diffraktives optisches Element zu wechseln, das im Strahl jeweils eine unterschiedliche Ausrichtung und/oder Formung bewirkt, ist in Figur 4b gezeigt. Dort ist ein linearer Wechselmagazinhalter vorgesehen, der mehrere diffraktive optische Elemente 19 aufnimmt, z.B. in Wechselmagazinhaltern 20. Die jeweiligen diffraktiven optischen Elemente 19 können mit einem Betätigungsmittel 23, dass sich z.B. transversal und/oder senkrecht zur Erstreckungsrichtung des Magazins bewegen kann, in den optischen Strahlengang 25 eingeschoben werden. Dieser Wechselmagazinhalter kann einem linearen Diamagazin ähneln, aus dem jeweils ein ausgewähltes diffraktives optisches Element wie ein Dia in den Strahlengang bewegt werden kann.

Das Verfahren kann mit unterschiedlichen Pulvermischungen, wie sie aus dem Stand der Technik bekannt sind, verwendet werden, beispielsweise Wolframkarbid, Warmarbeitsstahlpulver und so weiter. Es zeigt sich, dass mit der erfindungsgemäßen Strahldrehung trotz hoher Bearbeitungsgeschwindigkeiten gute Gefügestrukturen erhalten werden können und die Bearbeitungsgeschwindigkeit etwa zehnfach höher als bei punktförmigem oder zirkularsymmetrischem flächigem Fokus gewählt werden kann.

## Patentansprüche

1. 3D-Bauteildruckverfahren, bei welchem ein Körper aus Ausgangsmaterial aufgebaut wird, das spurenweise mit einem Strahl (10) bestrahlt wird, wobei der Strahl (10) ein wirksames Flächenprofil hat, wobei das wirksame Flächenprofil nicht rotationssymmetrisch ist, und
wobei das wirksame Flächenprofil des Strahls (10) simultan während des spurenweisen Bestrahlens gedreht und der Spurrichtung entsprechend ausgerichtet wird,
wobei das wirksame Flächenprofil mittels einer Strahlformungseinrichtung erzeugt wird, wobei die Strahlformungseinrichtung mindestens ein diffraktives optisches Element (14) umfasst,
wobei das diffraktive optische Element (14) zur Orientierung und/oder Drehung des wirksamen Flächenprofils gedreht wird, und
unterschiedliche diffraktive optische Elemente (19) in einem Magazin (21) angeordnet sind.

2. 3D-Bauteildruckverfahren nach dem vorhergehenden Anspruch, wobei das wirksame Flächenprofil quer zur Spurrichtung eine Breite B1 und in Spurrichtung eine Breite B2 aufweist, wobei B1 ≥ 1,5 B2, vorzugsweise B1 ≥ 3 B2, ist,
wobei bevorzugt die Breite B1 mindestens 1,5 mm, vorzugsweise mindestens 2 mm oder mindestens 3mm beträgt,
und/oder wobei die Breite B2 mindestens 0,1 mm, vorzugsweise mindestens 0,5 mm, beträgt.

3. 3D-Bauteildruckverfahren nach einem der vorhergehenden Ansprüche, wobei Ausgangsmaterial durch die Bestrahlung aufgeschmolzen wird und ein Profil der ausgangsmaterialaufschmelzenden Strahlintensität quer zur Spur mindestens 1,5 fach breiter als in Richtung der Spur ist, bevorzugt mindestens 2 fach breiter, besonders bevorzugt mindestens 3 fach breiter.

4. 3D-Bauteildruckverfahren nach einem der vorhergehenden Ansprüche, wobei der Strahl (10) auf einer Spur geführt wird, die zumindest bereichsweise gekrümmt ist, und das wirksame Flächenprofil der Krümmung entsprechend orientiert wird.

5. 3D-Bauteildruckverfahren nach dem vorhergehenden Anspruch, wobei dem Profilbereich ausgangsmaterialaufschmelzender Intensität in Strahlbewegungsrichtung ein Vorwärmbereich geringerer Intensität vorrausgeht und/oder ein Bereich geringerer Intensität nachfolgt.

6. 3D-Bauteildruckverfahren nach einem der vorhergehenden beiden Ansprüche, wobei die Strahlintensität über den Profilbereich ausgangsmaterialaufschmelzender Strahlintensität quer zur Strahlbewegungsrichtung variiert,
wobei bevorzugt der Profilbereich ausgangsmaterialaufschmelzender Strahlintensität quer zur Strahlbewegungsrichtung mehrere Intensitätsspitzen aufweist,
wobei die Intensität an diesen Intensitätsspitzen bevorzugt mindestens 1,3 fach, vorzugsweise mindestens 1,5 fach oder 2 fach, höher als entlang des übrigen Profilbereichs ausgangsmaterialaufschmelzender Strahlintensität ist,
und/oder wobei
eine mittlere Strahlintensität entlang mindestens eines quer zur Strahlbewegungsrichtung äußersten Abschnitts des Profilbereichs ausgangsmaterialaufschmelzender Strahlintensität größer als eine mittlere Strahlintensität entlang eines quer zur Strahlbewegungsrichtung inneren Abschnitts des Profilbereichs ausgangsmaterialaufschmelzender Strahlintensität ist, wobei zur Bestimmung der mittleren Strahlintensität die Strahlintensität jeweils quer zur Strahlbewegungsrichtung über eine Länge von 0,1 mm, vorzugsweise 0,2 mm oder 0,3 mm gemittelt wird
und/oder wobei,
wenn der Strahl (10) auf einer Spur geführt wird, die zumindest bereichsweise gekrümmt ist, eine mittlere Strahlintensität entlang eines zur Spur radial äußersten Abschnitts des Profilbereichs ausgangsmaterialaufschmelzender Strahlintensität größer als eine mittlere Stahlintensität entlang eines zur Spur radial innersten Abschnitts des Profilbereichs ausgangsmaterialaufschmelzender Strahlintensität ist, wobei zur Bestimmung der mittleren Strahlintensität die Strahlintensität jeweils quer zur Strahlbewegungsrichtung über eine Länge von 0,1 mm, vorzugsweise 0,2 mm oder 0,3 mm gemittelt wird.

7. 3D-Bauteildruckverfahren nach einem der vorhergehenden Ansprüche, wobei als Strahl (10) ein optischer Strahl, bevorzugt ein Laserstrahl, besonders bevorzugt ein Dauerstrichlaserstrahl verwendet wird,
wobei bevorzugt der Strahl (10) mittels eines Lasers erzeugt wird, wobei der Laser eine Ausgangsleistung von mindesten 5 kW, vorzugsweise mindestens 8 kW oder mindestens 10 kW, hat.

8. 3D-Bauteildruckverfahren nach einem der vorhergehenden Ansprüche,
wobei das Magazin ein revolverartig drehbares Magazin (21) oder ein lineares Magazin ist, und/oder
wobei die unterschiedlichen diffraktiven optischen Elemente wechselweise und/oder in Kombination in den Strahlengang (25) eingebracht werden.

9. Strahlausrichtende Baugruppe für eine 3D-Druckmaschine, in der Ausgangsmaterial spurweise mit einem Strahl (10) bestrahlt wird, um einen Körper daraus aufzubauen, wobei der Strahl (10) ein wirksames Flächenprofil hat, das nichtrotationssymmetrisch ist,
wobei die strahlausrichtende Baugruppe dazu ausgebildet ist, das wirksame Flächenprofil des Strahls simultan während des spurenweisen Bestrahlens der Spurrichtung folgend zu drehen,
wobei das wirksame Flächenprofil mittels einer Strahlformungseinrichtung erzeugt wird, wobei die Strahlformungseinrichtung mindestens ein diffraktives optisches Element (14) umfasst,
wobei das diffraktive optische Element (14) eingerichtet ist, zur Orientierung und/oder Drehung des wirksamen Flächenprofils gedreht zu werden, und unterschiedliche diffraktive optische Elemente (19) in einem Magazin (21) angeordnet sind.

10. Strahlausrichtende Baugruppe nach dem vorhergehenden Anspruch, wobei die strahlausrichtende Baugruppe ferner eine Flüssigkristallmatrix zur Strahlformung aufweist und/oder ein strahldrehendes Element.

11. 3D-Druckmaschine mit einer strahlausrichtenden Baugruppe nach einem der beiden vorhergehenden Ansprüche, **dadurch gekennzeichnet, dass** eine Steuerung vorgesehen ist, um den Strahl (10) entlang einer zumindest bereichsweise gekrümmten Spur zu lenken und das wirksame Flächenprofil entsprechend der Spurkrümmung zu orientieren.

12. 3D-Druckmaschine mit einer strahlausrichtende Baugruppe nach Anspruch 9 oder Anspruch 10, **dadurch gekennzeichnet, dass** sie eine Strahlquelle aufweist, die dazu ausgebildet ist, einen für die Einstrahlung in die strahlausrichtende Baugruppe bestimmten Strahl (10) zu erzeugen,
und die strahlausrichtende Baugruppe dazu ausgebildet ist, einen in sie eingestrahlten Strahl (10) mit einem orientierten wirksamen Flächenprofil auszugeben, wobei bevorzugt die 3D-Druckmaschine ferner eine Strahlformungseinrichtung aufweist, um dem Strahl (10) aus der Strahlquelle ein orientierbares, nicht rotationssymmetrisches Strahlprofil zu verleihen.

## Claims

1. A 3D component printing process wherein a body is built up from starting material which is irradiated track by track with a beam (10), the beam (10) having an effective area profile, the effective area profile not being rotationally symmetric, and
wherein the effective area profile of the beam (10) is rotated simultaneously during the track-by-track irradiation and aligned in accordance with the track direction,
wherein the effective area profile is generated by a beam shaping device, wherein the beam shaping device comprises at least one diffractive optical element (14),
wherein
the diffractive optical element (14) is rotated for orientation and/or rotation of the effective area profile, and
different diffractive optical elements (19) are arranged in a magazine (21).

2. The 3D component printing process according to the preceding claim,
wherein the effective area profile has a width B1 transverse to the track direction and a width B2 in the track direction, wherein B1 ≥ 1.5 B2, preferably B1 ≥ 3 B2,
wherein preferably the width B1 is at least 1.5 mm, preferably at least 2 mm or at least 3mm,
and/or wherein the width B2 is at least 0.1 mm, preferably at least 0.5 mm.

3. The 3D component printing process according to any one of the preceding claims,
wherein starting material is melted by irradiation and a profile of the starting material melting beam intensity, which profile is transverse to the track, is at least 1.5 times as wide as in the direction of the track, preferably at least 2 times as wide, particularly preferably at least 3 times as wide.

4. The 3D component printing process according to any one of the preceding claims,
wherein the beam (10) is guided on a track which is curved at least in some portions, and the effective area profile is oriented in accordance with the curvature.

5. The 3D component printing process according to the preceding claim,
wherein, in the beam movement direction, the profile area of starting material melting intensity is preceded by a preheating area of lower intensity and/or followed by an area of lower intensity.

6. The 3D component printing process according to one of the preceding two claims,
wherein the beam intensity varies transverse to the beam movement direction over the profile area of starting material melting beam intensity,
wherein preferably the profile area of the starting material melting beam intensity has a plurality of intensity peaks transverse to the beam movement direction,
wherein the intensity at these intensity peaks is preferably at least 1.3 times, preferably at least 1.5 times or 2 times, as high as along the remaining profile area of starting material melting beam intensity,
and/or wherein a mean beam intensity along at least one outermost portion of the profile area of starting material melting beam intensity in a direction transverse to the beam movement direction, is higher than a mean beam intensity along an inner portion of the profile area of starting material melting beam intensity in a direction transverse to the beam movement direction, wherein, in order to determine the mean beam intensity, in each case the beam intensity transverse to the beam movement direction is averaged over a length of 0.1 mm, preferably 0.2 mm or 0.3 mm,
and/or wherein,
when the beam (10) is guided on a track which is at least curved in some portions, a mean beam intensity along a portion of the profile area of starting material melting beam intensity which is radially outermost with respect to the track is higher than a mean beam intensity along a portion of the profile area of starting material melting beam intensity which is radially innermost with respect to the track, wherein, in order to determine the mean beam intensity, the beam intensity transverse to the beam movement direction is averaged over a length of 0.1 mm, preferably 0.2 mm or 0.3 mm.

7. The 3D component printing process according to any one of the preceding claims,
wherein an optical beam, preferably a laser beam, particularly preferably a continuous wave laser beam, is used as the beam (10),
wherein preferably the beam (10) is generated by means of a laser, the laser having an output power of at least 5 kW, preferably at least 8 kW or at least 10 kW.

8. The 3D component printing process according to any one of the preceding claims,
wherein the magazine is a revolver-like rotating magazine (21) or a linear magazine, and/or
wherein the different diffractive optical elements are introduced alternately and/or in combination into the beam path (25).

9. A beam orienting assembly for a 3D printing machine in which starting material is irradiated track-wise with a beam (10) to build up a body therefrom, the beam (10) having an effective area profile which is not rotationally symmetric,
wherein the beam orienting assembly is adapted to rotate the effective area profile of the beam in accordance with the track direction simultaneously during the track-by-track irradiation,
wherein the effective area profile is generated by a beam shaping device, wherein the beam shaping device comprises at least one diffractive optical element (14),
wherein
the diffractive optical element (14) is configured to be rotated for orientation and/or rotation of the effective area profile, and
different diffractive optical elements (19) are arranged in a magazine (21).

10. The beam orienting assembly according to the preceding claim,
wherein the beam orienting assembly further comprises a liquid crystal matrix for beam shaping and/or a beam rotating element.

11. A 3D printing machine comprising a beam orienting assembly according to one of the two preceding claims, **characterized in that** a control is provided for directing the beam (10) along a track curved in at least in some portions, and orienting the effective area profile in accordance with the track curvature.

12. The 3D printing machine with a beam orienting assembly according to claim 9 or claim 10, **characterized in that** it comprises a beam source which is configured to generate a beam (10) intended for irradiation into the beam orienting assembly,
and **in that** the beam orienting assembly is configured to output a beam (10) irradiated therein with an oriented effective area profile, wherein preferably the 3D printing machine further comprises a beam shaping device for providing the beam (10) from the beam source with an orientable, not rotationally symmetric beam profile.

## Revendications

1. Procédé d'impression 3D de composants, où un corps est réalisé à partir d'un matériau initial irradié par pistes au moyen d'un faisceau (10), le faisceau (10) ayant un profil de surface actif, le profil de surface actif n'étant pas à symétrie de révolution, et
où le profil de surface actif du faisceau (10) est tourné simultanément pendant l'irradiation par pistes et orienté suivant la direction des pistes,
où le profil de surface actif du faisceau (10) est généré au moyen d'un dispositif de formation de faisceau, le dispositif de formation de faisceau comprenant au moins un élément optique diffractif (14),
où l'élément optique diffractif (14) est tourné afin d'orienter et/ou de faire tourner le profil de surface actif, et
différents éléments optiques diffractifs (19) sont disposés dans un magasin (21).

2. Procédé d'impression 3D de composants selon la revendication précédente, où le profil de surface actif présente une largeur B1 transversalement à la direction de piste et une largeur B2 dans la direction de piste, B1 étant ≥ 1,5 B2, de préférence B1 ≥ 3 B2,
où la largeur B1 est avantageusement d'au moins 1,5 mm, de préférence d'au moins 2 mm ou d'au moins 3 mm,
et/ou où la largeur B2 est d'au moins 0,1 mm, de préférence d'au moins 0,5 mm.

3. Procédé d'impression 3D de composants selon l'une des revendications précédentes, où le matériau initial est fondu par l'irradiation et un profil de l'intensité de faisceau faisant fondre le matériau initial est au moins 1,5 fois plus large transversalement à la piste que dans la direction de la piste, avantageusement au moins 2 fois plus large, de préférence au moins 3 fois plus large.

4. Procédé d'impression 3D de composants selon l'une des revendications précédentes, où le faisceau (10) est guidé sur une piste incurvée au moins en partie, et où le profil de surface actif est orienté suivant la courbure.

5. Procédé d'impression 3D de composants selon la revendication précédente, où la plage de profil d'intensité de fusion du matériau initial est précédée d'une plage de préchauffage de moindre intensité et/ou est suivie d'une plage de moindre intensité dans la direction de déplacement du faisceau.

6. Procédé d'impression 3D de composants selon l'une des deux revendications précédentes, où l'intensité du faisceau varie sur la plage de profil d'intensité de faisceau faisant fondre le matériau initial transversalement à la direction de déplacement du faisceau,
où la plage de profil d'intensité de faisceau faisant fondre le matériau initial présente de préférence plusieurs pics d'intensité transversalement à la direction de déplacement du faisceau,
où l'intensité au niveau desdits pics d'intensité est de préférence d'au moins 1,3 fois, de préférence d'au moins 1,5 fois ou 2 fois plus élevée que le long du reste de la plage de profil d'intensité de faisceau faisant fondre le matériau initial, et/ou où
une intensité moyenne du faisceau le long d'au moins une section ultrapériphérique de la plage de profil d'intensité de faisceau faisant fondre le matériau initial, transversalement à la direction de déplacement du faisceau, est supérieure à une intensité moyenne du faisceau le long d'une section intérieure de la plage de profil d'intensité de faisceau faisant fondre le matériau initial, transversalement à la direction de déplacement du faisceau, où, pour déterminer l'intensité moyenne du faisceau, une moyenne d'intensité du faisceau est respectivement calculée transversalement à la direction de déplacement du faisceau sur une longueur de 0,1 mm, de préférence de 0,2 mm ou de 0,3 mm et/ou
où, lorsque le faisceau (10) est guidé sur une piste incurvée au moins en partie, une intensité moyenne du faisceau le long d'une section, radialement ultrapériphérique par rapport à la piste, de la plage de profil d'intensité de faisceau faisant fondre le matériau initial, est supérieure à une intensité moyenne du faisceau le long d'une section, radialement la plus intérieure par rapport à la piste, de la plage de profil d'intensité de faisceau faisant fondre le matériau initial, où, pour déterminer l'intensité moyenne du faisceau, une moyenne d'intensité du faisceau est respectivement calculée transversalement à la direction de déplacement du faisceau sur une longueur de 0,1 mm, de préférence de 0,2 mm ou de 0,3 mm.

7. Procédé d'impression 3D de composants selon l'une des revendications précédentes, où est utilisé comme faisceau (10) un faisceau optique, avantageusement un faisceau laser, de préférence un faisceau laser à onde continue,
où le faisceau (10) est généré de préférence au moyen d'un laser, le laser ayant une puissance de sortie d'au moins 5 kW, de préférence d'au moins 8 kW ou d'au moins 10 kW.

8. Procédé d'impression 3D de composants selon l'une des revendications précédentes, où le magasin est un magasin rotatif de type tourelle revolver (21) ou un magasin linéaire, et/ou
où les différents éléments optiques diffractifs sont introduits de manière alternée et/ou combinée sur le trajet du faisceau (25).

9. Module d'orientation de faisceau pour une imprimante 3D, où un matériau initial est irradié par pistes au moyen d'un faisceau (10) pour réaliser un corps, le faisceau (10) ayant un profil de surface actif exempt de symétrie de révolution,
où le module d'orientation de faisceau est prévu pour faire tourner le profil de surface actif du faisceau simultanément pendant l'irradiation par pistes suivant la direction des pistes,
où le profil de surface actif est généré au moyen d'un dispositif de formation de faisceau, le dispositif de formation de faisceau comprenant au moins un élément optique diffractif (14),
où l'élément optique diffractif (14) est prévu pour être tourné afin d'orienter et/ou de faire tourner le profil de surface actif, et
différents éléments optiques diffractifs (19) sont disposés dans un magasin (21).

10. Module d'orientation de faisceau selon la revendication précédente, ledit module d'orientation de faisceau comprenant en outre une matrice à cristaux liquides pour la formation de faisceau et/ou un élément de rotation de faisceau.

11. Imprimante 3D avec un module d'orientation de faisceau selon l'une des deux revendications précédentes, **caractérisée en ce qu'**une commande est prévue pour diriger le faisceau (10) le long d'une piste incurvée au moins en partie et pour orienter le profil de surface actif suivant la courbure de piste.

12. Imprimante 3D avec un module d'orientation de faisceau selon la revendication 9 ou la revendication 10,
**caractérisée en ce qu'**elle comprend une source de faisceau prévue pour générer un faisceau (10) destiné à irradier le module d'orientation de faisceau,
et **en ce que** le module d'orientation de faisceau est prévu pour délivrer un faisceau (10) irradié dans celui-ci avec un profil de surface actif orienté, l'imprimante 3D comprenant de préférence en outre un dispositif de formation de faisceau donnant au faisceau (10) issu de la source de rayonnement un profil de faisceau orientable, exempt de symétrie de révolution.
